# DEMANDE DE BREVET EUROPEEN

(11) **EP 3 378 728 A1**
(43) Date de publication de la demande: **26.09.2018**
(21) Numéro de dépôt: 18305273.7
(22) Date de dépôt: 14.03.2018
(51) Int. Cl.: B62B 3/00, B62B 9/26

(54) **CHARIOT DE COURSES POUR POUSSETTE**

(30) Priorité: 15.03.2017 FR 1752100
(71) Demandeur: Saada, née Khalifa, Caroline, 92200 Neuilly sur Seine (FR)
(72) Inventeur: SAADA née KHALIFA, Caroline, 92200 NEUILLY SUR SEINE (FR); SAADA, Gary, 92200 NEUILLY SUR SEINE (FR)
(74) Mandataire: CAPRI

(57) **Abrégé**

Chariot de courses (C) définissant un volume de stockage et comprenant une base rigide (1) munie de deux à quatre roulettes (11), une structure de stockage (2) montée sur la base rigide (1) et des moyens de fixation (3i, 4i ; 3s, 4s) destinés à connecter le chariot de courses (C) à une poussette, la structure de stockage (2) comprenant une face supérieure (20), deux faces latérales (22) raccordées à la base rigide (1), une face avant (23) et une face arrière (24) raccordées à la base rigide (1), la face avant (23) étant destinée à venir en regard de la poussette, les moyens de fixation (3i, 4i ; 3s, 4s) étant prévus au niveau de cette face avant (23),
caractérisé en ce que :
- les moyens de fixation (3i, 4i ; 3s, 4s) comprennent des moyens de fixation inférieurs (3i, 4i) prévus sur la face avant (23) à proximité de la base rigide (1) et des moyens de fixation supérieurs (3s, 4s) prévus sur la face avant (23) à proximité de la face supérieure (20), et
- la structure de stockage (2) est déformable, de sorte que la face avant (23) peut venir au plus près de la poussette (P), à la fois au niveau de la base rigide (1) et au niveau de la face supérieure (20), en déformant la structure de stockage (2).

## Description

### DOMAINE TECHNIQUE DE L'INVENTION

La présente invention concerne un chariot de courses destiné à s'accrocher à une poussette.

D'une manière générale, il n'est pas aisé de faire ses courses avec une poussette. En effet, les poussettes traditionnelles ont un petit panier en-dessous, mais celui-ci ne permet pas de contenir une grande quantité de marchandises. Une fois à l'extérieur du supermarché, le fait d'accrocher des sacs chargés de denrées aux poignées d'une poussette risque fortement de la faire basculer en arrière, notamment lorsqu'on franchit des marches ou trottoirs, ce qui est dangereux pour l'enfant.

En outre, les sacs plastiques ne sont plus librement distribués dans les commerces ce qui rend nécessaire de trouver un système global.

L'invention vise à remédier aux inconvénients précités et propose un chariot de courses apte à s'accrocher à l'arrière d'une grande majorité de poussettes, de manière stable, et dont le volume permet de contenir une grande quantité de marchandises, sans gêner la visibilité de l'utilisateur sur l'enfant placé dans la poussette, ni encombrer la poussette et entraver sa mobilité et sa capacité à changer de direction.

### EXPOSÉ DE L'INVENTION

Pour ce faire, la présente invention propose un chariot de courses définissant un volume de stockage et comprenant une base rigide délimitant le fond du volume de stockage, ladite base rigide étant munie de deux à quatre roulettes, le chariot comprenant également une structure de stockage montée sur la base rigide, afin de créer le volume de stockage et des moyens de fixation destinés à connecter le chariot de courses à une poussette, la structure de stockage comprenant :
- une face supérieure ouverte ou munie d'un couvercle,
- deux faces latérales raccordées à la base rigide,
- une face avant et une face arrière raccordées à la base rigide, la face avant étant destinée à venir en regard de la poussette, les moyens de fixation étant prévus au niveau cette face avant,
dans lequel :
- les moyens de fixation comprennent des moyens de fixation inférieurs prévus sur la face avant à proximité de la base rigide et des moyens de fixation supérieurs prévus sur la face avant à proximité de la face supérieure, et
- la structure de stockage est déformable, de sorte que la face avant peut venir au plus près de la poussette, à la fois au niveau de la base rigide et au niveau de la face supérieure, en déformant la structure de stockage.

Avantageusement, la structure de stockage est réalisée en un matériau textile relativement rigide qui présente une tenue propre, sans besoin d'une armature de support. On peut par exemple utiliser de la toile cirée ou du vinyle.

Avantageusement, la structure de stockage est pliable ou enroulable dans un état compact sur la base rigide. Les moyens de fixation peuvent alors aussi servir à maintenir la structure de stockage dans son état compact sur la base rigide.

Afin de conférer une bonne tenue, particulièrement dans le sens vertical, les faces latérales sont raccordées aux faces avant et arrière au moyen de coutures surpiquées, avantageusement à ganse passepoil.

Selon une autre caractéristique de l'invention, la structure de stockage comprend de trous d'évent, avantageusement à proximité de la base rigide. Cela permet de plier ou d'enrouler la structure de stockage sans emprisonner de l'air à l'intérieur. L'ai contenu dans le volume de stockage peut ainsi s'en échapper à travers les trous d'évent.

Selon une forme de réalisation pratique, les moyens de fixation comprennent des passants et des sangles qui passent dans les passants et viennent en prise avec un élément de la poussette. De préférence, les moyens de fixation inférieurs et supérieurs comprennent chacun une paire de passants, avantageusement double, cousus sur la face avant et une paire de sangles, avantageusement à Scratch. On peut ainsi rapprocher au plus près les roulettes du chariot et de la poussette en minimisant le jeu entre eux et on peut accrocher la face avant de la structure de stockage à la poussette en minimisant également le jeu entre elles.

Selon un mode de réalisation, les faces latérales sont pourvues de plaques rigides, avantageusement amovibles ou pliables. De préférence, les plaques rigides présentent des coins arrondis pour permettre la déformation de la structure de stockage. On peut ainsi déformer la structure de stockage sans avoir à retirer préalablement les plaques rigides.

Selon un autre aspect de l'invention, la structure de stockage comprend une enveloppe externe et une doublure interne, la base rigide étant disposée entre l'enveloppe externe et la doublure interne.

Avantageusement, la base rigide et au moins une partie de la structure de stockage présentent des propriétés isothermes. Par ailleurs, au moins une face parmi la face arrière et les faces latérales est transparente. On peut ainsi voir le contenu du volume de stockage sans avoir à regarder par la face supérieure.

Avantageusement, le chariot de courses présente des dimensions telles que l'utilisateur peut tenir des moyens de préhension de la poussette avec le chariot de courses fixé à la poussette.

L'invention définit également un ensemble d'une poussette et d'un chariot de courses selon l'une quelconque des revendications précédentes, caractérisé en ce que le chariot de courses est accroché de manière amovible à l'arrière de la poussette par les moyens de fixation, en déformant si nécessaire la structure de stockage.

Ainsi, le chariot de courses est apte à s'accrocher de manière stable à une grande majorité de poussettes, sans la déstabiliser, c'est-à-dire sans la faire basculer en arrière. Le chariot est ainsi déplacé avec la poussette, ce qui permet de ne pas déstabiliser la poussette tout en assurant au chariot de courses son propre moyen de déplacement.

De plus, le chariot de courses, qui est décrochable de la poussette, est stable, qu'il soit vide ou plein, même s'il n'est pas accroché à la poussette.

Les roulettes sont avantageusement pivotantes à 360°. Les roulettes du chariot sont disposées sous la base rigide, de manière à ne pas gêner les roues de la poussette. Avantageusement les roulettes ne dépassent pas sur les côtés et ne sont donc pas situées aux extrémités. De préférence les roulettes sont de petites tailles, de l'ordre de 6 à 10 cm.

Les moyens de fixation coopèrent avec au moins un moyen complémentaire à l'arrière de la poussette autre que les roues de ladite poussette.

La souplesse de la face arrière, celle au contact de la personne qui pousse la poussette, permet aussi de ne pas gêner l'utilisateur lorsque le chariot de courses n'est pas plein. Ainsi, la face arrière s'aplanit et ne prend pas un volume maximal.

La souplesse de la face avant, qui est au contact ou proche de l'arrière de la poussette, permet aussi de ne pas gêner la position de la poussette, notamment lorsque ladite poussette est en position allongée (lorsque l'enfant dort par exemple).

Les faces latérales sont aussi déformables, de manière à permettre à la face avant s'incliner vers l'avant ou vers l'arrière et ainsi d'être au plus près de la poussette.

Les faces latérales peuvent être renforcées par l'introduction de plaques rigides dans une ouverture, comme une fente, ménagée au niveau de chaque face latérale. Ainsi, il est possible de retirer les plaques rigides lors du rangement du chariot de courses, qui peut ainsi être plié, afin qu'il prenne moins de place. Ces fentes s'ouvrent par exemple sur un espace ménagé dans l'épaisseur des faces latérales pour y glisser les plaques rigides. Les plaques peuvent aussi être pliables et rester en place lors du pliage de la structure de stockage, qui peut par exemple être en tissu ou en matière plastique et dans ce cas comprendre une doublure de façon à glisser les plaques entre ceux-ci.

Les systèmes de fixation à Scratch coopèrent avec l'armature arrière de la poussette, en dessous des poignées ou des anses de ladite poussette pour la partie haute, et au niveau de l'armature des roues de la poussette pour la partie basse, et de manière avantageuse avec la majorité des poussettes existant sur le marché, peu important l'épaisseur de l'armature de la poussette. Le système de sangle de Scratch adhésif, où la face avant consiste en un adhésif et l'autre face, en un Velcro, est suffisamment long, pour s'enrouler sur lui-même. Il présente une encoche située en amont de la sangle, ce qui permet à la face en Velcro d'entrer dans l'encoche, par le dessous, et de s'intégrer à la face adhésive en sortant de l'encoche, par le dessus. La longueur totale de la sangle est de l'ordre d'environ 20 cm (voire moins) avec environ 10 cm d'adhésif et environ 10 cm de Velcro. Le Scratch s'enroule sur la face adhésive, comme un système de brassard, de sorte à s'adapter à n'importe quelle épaisseur d'armature de poussette.

De manière avantageuse, le chariot peut comporter un rabat, muni d'une anse, apte à recouvrir la face supérieure. Ainsi, le volume de stockage est apte à être refermé, et le chariot de courses peut être déplacé par ladite anse lorsqu'il n'est pas accroché à la poussette, tandis qu'il sera déplacé par l'intermédiaire des anses ou poignées de la poussette lorsqu'il est lié à ladite poussette.

Cela permet à l'utilisateur de transporter le chariot de courses rempli de marchandises d'une main, avec l'enfant dans le bras opposé, une fois la poussette rangée. Dans un local à poussettes par exemple, hypothèse où l'on habite par exemple en immeuble avec un petit ascenseur ou de manière générale lorsqu'il n'est pas possible de rentrer dans son intérieur avec la poussette, il est bien évidemment impossible de porter un enfant dans les bras avec une multitude de sacs de courses. Le système de roues pivotantes tel que décrit précédemment permet de pousser le chariot de courses sans difficulté, avec une seule main.

La largeur du chariot de courses est avantageusement inférieure à la distance entre les deux roues arrière de la poussette. Ainsi son empiètement n'est pas plus large que la poussette. Cela permet de pousser la poussette sans être gêné par le chariot. Sa hauteur est inférieure à la poussette, de façon à ne pas gêner les anses ou poignées de la poussette. Le chariot de courses présente des dimensions inférieures à tout type de poussette canne et une majorité d'autres modèles du marché. A titre d'exemple, ses dimensions sont de l'ordre de 90 cm en hauteur, 34 cm en longueur et une largeur comprise entre 22 et 25 cm.
Le chariot de courses peut être plié dans le panier sous la poussette et être déplié et accroché à la poussette au moment de faire les courses.

Dans la plupart des cas, c'est en poussant la poussette que l'on pousse le chariot. L'inverse est également possible dans certains cas particuliers, mais non préférable.

L'esprit de l'invention repose sur le fait que le chariot de courses coopère de manière synergique avec la poussette qui fait fonction de moyen d'haubanage pour la structure de stockage déformable. En effet, la base rigide du chariot est fixée à la poussette par les moyens de fixation inférieurs. La base rigide est ainsi forcée de suivre fidèlement les déplacements de la poussette. Le poids du contenu du chariot repose sur la base rigide à roulettes. Ensuite, la structure rigide de la poussette va servir à maintenir la structure de stockage en position sensiblement verticale ou légèrement inclinée, exactement à la manière d'un hauban. On peut ainsi dire que structure de stockage est suspendue à la poussette par les moyens de fixation supérieurs, sans avoir à supporter le poids, qui repose sur la base rigide à roulettes. La déformabilité de la structure de stockage permet de relier le chariot à la poussette avec un minimum de degré de liberté : le chariot est solidement arrimé à la poussette, à la fois en bas et en haut. La structure de stockage peut ainsi être penchée de manière limitée vers l'avant ou vers l'arrière, tout en préservant sa stabilité. La présente invention combine une connexion inférieure par traction horizontale avec une connexion supérieure par suspension verticale, le tout avec des jeux très limités, grâce à la déformabilité de la structure de stockage.

### DESCRIPTION DES FIGURES

D'autres avantages, buts et caractéristiques particulières de la présente invention ressortiront de la description non limitative qui suit d'au moins un mode de réalisation particulier des dispositifs objets de la présente invention, en regard des dessins annexés, dans lesquels :
La figure 1 est une vue en perspective de l'arrière du chariot de course selon l'invention, à l'état fermé,
La figure 2 est une vue similaire à celle de la figure 1 à l'état ouvert,
La figure 3 est une vue en perspective de l'avant du chariot des figures 1 et 2, à l'état fermé,
La figure 4a est une vue en plan très fortement agrandie d'un passant double du chariot des figures 1 à 3,
La figure 4b est une vue en coupe transversale horizontale à travers le chariot des figures 1 à 3,
Les figures 5a et 5b sont des vues schématiques en coupe verticale illustrant un chariot dont la structure de stockage incorpore des panneaux rigides, respectivement en position droite et inclinée,
Les figures 6 et 7 sont des vues illustrant le chariot de courses de l'invention arrimé à des poussettes de configurations différentes, et
La figure 8 est une vue en coupe montrant le chariot de l'invention avec sa structure de stockage à l'état plié.

### DESCRIPTION DÉTAILLÉE DE MODES DE RÉALISATION DE L'INVENTION

On note dès à présent que les Figures ne sont pas à l'échelle. Les indications de dimensions sont données à titre indicatif et ne constituent en rien une limitation de l'invention qui peut admettre une diversité de dimensions et de formes. Il peut présenter une hauteur de 90 cm, une longueur de 34 cm et une largeur entre 22 et 25 cm. Le chariot de courses C présente ici une configuration générale parallélépipédique avec une section transversale horizontale rectangulaire. Une configuration cylindrique est toutefois envisageable, avec une section transversale horizontale ovale ou oblongue.

Le chariot de courses C définit un volume de stockage V, dans lequel on peut entreposer des articles divers. Il comprend tout d'abord une base rigide 1 qui délimite le fond du volume de stockage V. Cette base rigide 1 est munie de quatre roulettes 11. Dans certains cas, on peut ne prévoir que trois roulettes, voire même deux.

Les roulettes 11 ne doivent pas dépasser sur les côtés de la base rigide 1. Les roulettes 2 sont de petites tailles, de l'ordre de 6 à 10 cm. Elles sont pivotantes à 360°. La base rigide 1 s'insère entre les deux roues arrière de la poussette. Son empiètement ne doit pas être plus large que la poussette. Sa hauteur doit être inférieure à celle de la poussette. Il peut ainsi s'insérer dans tout type de poussette, et notamment une poussette canne, dont la largeur est plus petite.

La base rigide 1 peut être formée à partir d'une plaque suffisamment résistante pour supporter la fixation des roulettes 11 et un poids de l'ordre de 20 kg sans se déformer. On peut utiliser une plaque de plastique, de carton, de bois, de métal, etc. Un matériau d'isolation thermique est également envisageable. La base rigide peut avoir une épaisseur de 0,5 cm à 4 cm.

Le chariot de courses C comprend également une structure de stockage 2 montée sur la base rigide 1, afin de créer avec elle le volume de stockage V. cette structure de stockage 2 comprend :
- une face supérieure 20 qui est munie d'un couvercle 21,
- une face de fond 28 qui s'étend sous la base rigide 1,
- deux faces latérales 22 raccordées à la base rigide 1,
- une face avant 23 et une face arrière 24 raccordées à la base rigide 1 et aux faces latérales 22.

Le couvercle 21 est optionnel : la face supérieure 20 peut rester ouverte.

La face de fond 28 est optionnelle. Les bords inférieurs des faces 22, 23 et 24 peuvent être fixés sous la base rigide 1.

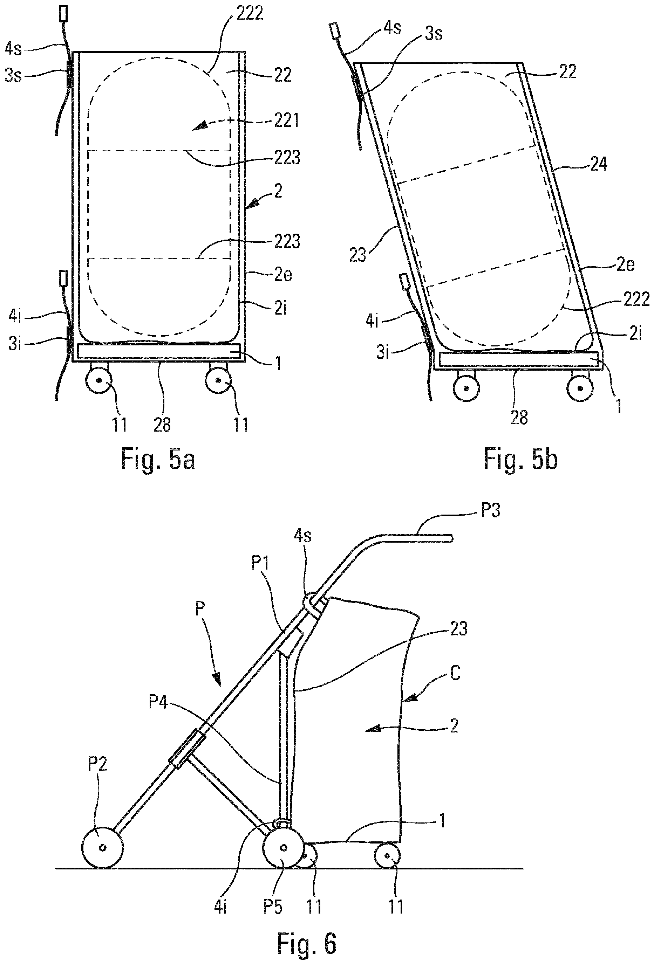

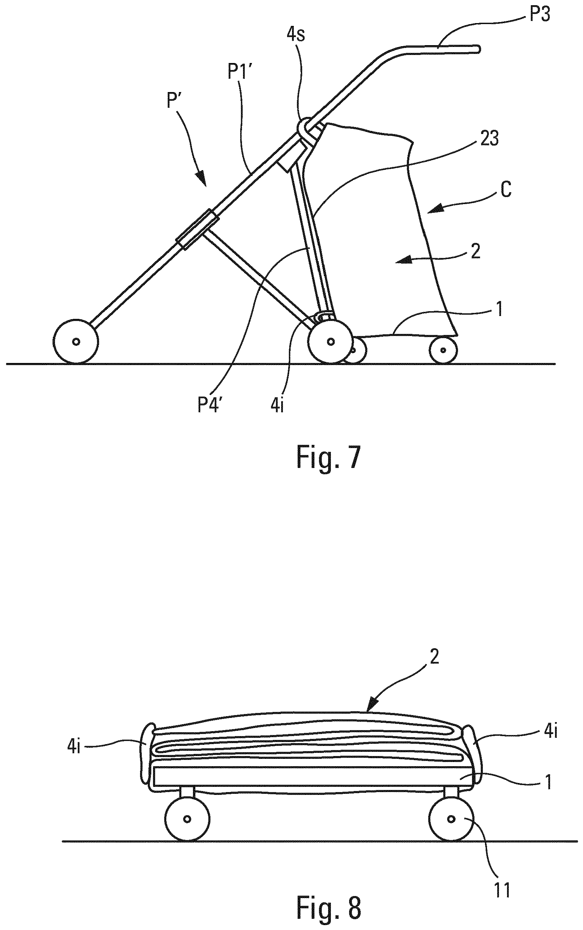

La face avant 23 est destinée à venir en regard d'une poussette P, comme on peut le voir sur les figures 6 et 7. Elle peut être pourvue d'une poignée ou anse 27.

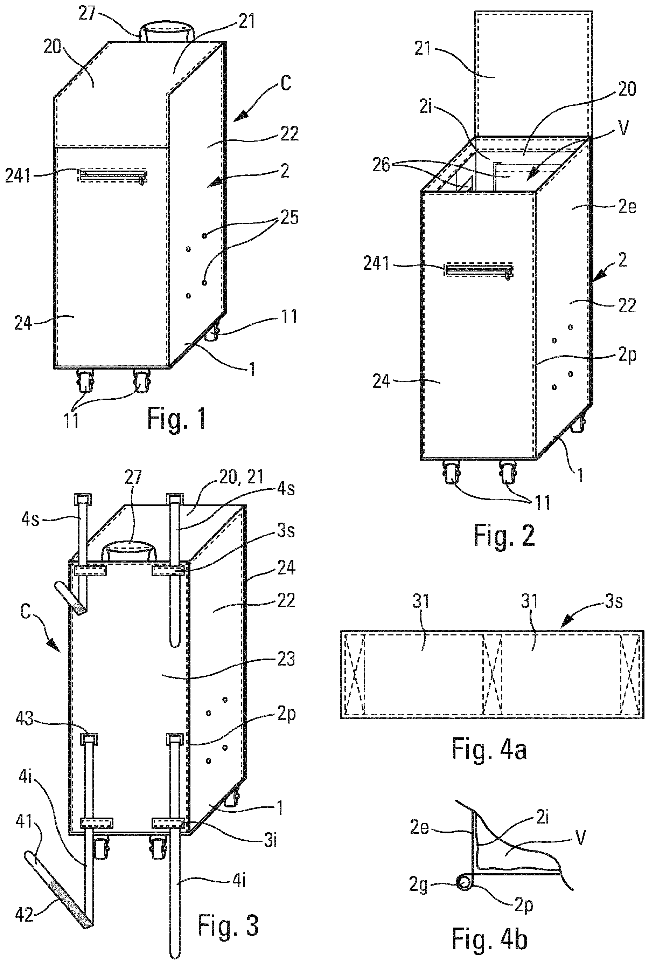

La structure de stockage 2 est souple ou déformable, de manière à pouvoir être pliée ou enroulée. Elle peut être réalisée en un matériau textile quelconque. La structure de stockage 2 peut inclure un matériau isotherme. Avantageusement, le matériau textile utilisé présente une certaine tenue propre qui est intrinsèque au matériau, et non pas due à des accessoires, des traitements ou techniques de couture. La structure de stockage peut ainsi tenir debout, comme représenté sur les figures 1 à 3 du seul fait de la rigidité toute relative de son matériau textile.

Toutefois, la tenue de la structure de stockage 2 peut être augmentée au moyen de coutures surpiquées 2p, avantageusement à ganse passepoil 2g, comme représenté sur la figure 4b. Ces coutures 2p sont formées au niveau où les faces latérales 22 se raccordent aux faces avant 23 et arrière 24. Elles s'étendent donc verticalement, renforçant ainsi principalement la tenue verticale, sans pour autant empêcher le pliage ou l'enroulement de la structure de stockage 2.

La structure de stockage 2 comprend avantageusement une enveloppe externe 2e et une doublure interne 2i. L'enveloppe externe 2e peut par exemple être en toile cirée ou en vinyle. La doublure interne 2i peut être en n'importe quel textile souple résistant. Comme on peut le voir sur les figures 5a et 5b, la base rigide 1 peut être disposée entre l'enveloppe externe 2e et la doublure interne 2i. L'enveloppe externe 2e, au niveau de la face arrière 24, peut être pourvue d'une poche 241. La doublure interne 2i peut également être pourvue de poches internes 26.

La structure de stockage 2 est également percée d'un ou plusieurs trous d'évent 25, de préférence au niveau de ses faces latérales 22. Ces trous d'évent 25 font directement communiquer le volume de stockage V avec l'extérieur. L'air contenu dans le volume de stockage peut ainsi s'échapper, lorsque l'on plie ou enroule la structure de stockage 2.

Le chariot de courses C comprend également des moyens de fixation 3i, 4i ; 3s, 4s au niveau de la face avant 23. Plus précisément, les moyens de fixation 3i, 4i ; 3s, 4s sont solidaires de la face avant 23. Même si les moyens de fixation étaient fixés aux faces latérales 22, on considérerait qu'ils sont prévus au niveau de la face avant 23, étant donné qu'ils ont pour fonction de s'étendre entre la face avant 23 et la poussette P. En effet, les moyens de fixation 3i, 4i ; 3s, 4s sont destinés à connecter le chariot de courses C à une poussette P et c'est la face avant 23 qui est destinée à être tournée vers la poussette.

Les moyens de fixation pourraient être de toute nature et utiliser des techniques de fixation diverses. Toutefois, un mode de réalisation avantageux prévoit au moins deux passants 3i; 3s et deux sangles 4i ;4s qui passent respectivement dans les passants 3i; 3s et viennent en prise avec un élément de la poussette P. Un passant 3i et une sangle 4i peuvent être prévus sur la face avant 23 à proximité de la base rigide 1 et un passant 3s et une sangle 4s peuvent être prévus sur la face avant 23 à proximité de la face supérieure 20. Plus avantageusement encore, deux passants 3i et deux sangles 4i peuvent être prévus sur la face avant 23 à proximité de la base rigide 1 et deux passants 3s et deux sangles 4s peuvent être prévus sur la face avant 23 à proximité de la face supérieure 20, comme on peut le voir sur la figure 3. On peut même prévoir de doubler 31 les passants 3s et 3i pour chaque sangle, comme représenté sur la figure 4a. Cela permet de modifier l'écartement entre les sangles 4s, respectivement 4i, pour s'adapter aux différentes configurations de poussettes, dans le but de réaliser une fixation entre le chariot et la poussette avec le moins de jeu ou de degré de liberté possible.

Chaque sangle 4i, 4s est pourvue d'une bande de Scratch, où l'adhésif 41 est sur une face, et le Velcro 42 sur l'autre face. Cette bande de Scratch est suffisamment longue pour s'enrouler sur elle-même, comme un système de brassard. De la sorte, le chariot de courses peut s'adapter à tout type de poussette, quelle que soit la largeur de l'armature. Dans un mode de réalisation particulier, on prévoit une boucle 43 en amont de la bande, où la face adhésive 41 entre, et en ressortant s'intègre à la face en Velcro 42. La longueur de la sangle est d'environ 20 cm, soit environ 10 cm de Velcro et 10 cm d'adhésif.

Les face latérales 22 peuvent comprendre des plaques rigides 221, qui sont par exemple insérées entre l'enveloppe externe 2e et la doublure interne 2i. Ces plaques rigides 10 sont amovibles ou fixes. Lorsqu'elles sont fixes, elles peuvent être formées avec les lignes de pli 223 pour imposer un sens et/ou un ordre de pliage à la structure de stockage 2. Les plaques rigides 221 ont de préférence des coins arrondis 222, de manière à ne pas créer d'équerrage qui empêcherait une inclinaison de la structure de stockage 2, notamment vers ou en éloignement de la poussette, comme on peut le voir sur la figure 5b. En effet, de telles plaques rigides 221, avec des coins arrondis 222 et avantageusement avec les lignes de pli 223, permettent aux faces avant 23 et arrière 24 de pencher en avant ou en arrière de manière limitée, tout en maintenant les faces latérales sensiblement planes, même si elles passent d'une configuration rectangulaire à une configuration plutôt en forme de parallélogramme.

Sur la figure 6, on voit un chariot C de l'invention arrimé à une poussette P de type canne, comprenant deux cannes transversales P1 qui relient des roues avant P2 à des poignées P3. La poussette comprend également deux cannes verticales P4 qui relient des roues arrière P5 aux cannes transversales P1. Les sangles 4i sont fermement en prise avec les cannes verticales P4 à proximité des roues arrière P5. Les roulettes 11 du chariot C viennent avantageusement se loger entre les roues arrière P5. Quant aux sangles 4s, elles sont fermement en prise avec les cannes transversales P1. La structure de stockage 2 est globalement bien centrée sur la base rigide 1, même si elle subit une légère déformation au niveau de sa partie supérieure en prise avec les cannes transversales P1. On peut voir que la face avant 23 suit d'abord les cannes verticales P4, puis ensuite les cannes transversales P1.

Sur la figure 7, la poussette P' présente une autre configuration avec des cannes transversales P1' plus inclinées et des cannes « verticales » P4' légèrement inclinées vers l'avant. Dans cette configuration, on peut voir que la structure de stockage 2 penche vers l'avant, comme sur la figure 5b, sans pour autant être déstabilisée, étant donné que son barycentre est toujours positionné à l'aplomb de la base rigide 1 et qu'elle est fermement arrimée à la poussette P' en haut et en bas.

Sur la figure 8, on peut voir le chariot C dans un état compact, avec sa structure de stockage 2 pliée, qui est avantageusement maintenue dans cet état par les sangles 4i ou 4s. La structure de stockage 2 peut intégrer des plaques rigides 221 et être formée avec des coutures surpiquées à ganse passepoil.

Ainsi, du fait de sa capacité à se déformer, la structure de stockage 2 peut toujours être fixée au plus court à un élément d'une poussette au niveau de sa partie haute, alors que sa base rigide 1 est aussi fixée au plus court à la poussette. La structure de stockage 2 est suspendue à la poussette, qui néanmoins ne supporte pas le poids du chariot C qui repose sur la base rigide 1. Ce chariot C, avec une base rigide de support de charge et une structure de stockage déformable haubanée apporte une très grande modularité, en découplant les moyens de fixation supérieurs 3s, 4s des moyens de fixation inférieurs 3i, 4i. Toutefois, le chariot C, même rempli, ne peut pas déstabiliser la poussette, car la base rigide est solidaire de la poussette avec pratiquement aucun jeu. La poussette et la base rigide forment ensemble une structure complexe unitaire, tandis que la structure de stockage est maintenue à la verticale de la base rigide par sa fixation haute à la poussette.

## Revendications

1. Chariot de courses (C) définissant un volume de stockage (V) et comprenant une base rigide (1) délimitant le fond du volume de stockage (V), ladite base rigide (1) étant munie de deux à quatre roulettes (11), une structure de stockage (2) montée sur la base rigide (1), afin de créer le volume de stockage (V) et des moyens de fixation (3i, 4i ; 3s, 4s) destinés à connecter le chariot de courses (C) à une poussette (P), la structure de stockage (2) comprenant :
- une face supérieure (20) ouverte ou munie d'un couvercle (21),
- deux faces latérales (22) raccordées à la base rigide (1),
- une face avant (23) et une face arrière (24) raccordées à la base rigide (1), la face avant (23) étant destinée à venir en regard de la poussette (P), les moyens de fixation (3i, 4i ; 3s, 4s) étant prévus au niveau de cette face avant (23),
**caractérisé en ce que** :
- les moyens de fixation (3i, 4i ; 3s, 4s) comprennent des moyens de fixation inférieurs (3i, 4i) prévus sur la face avant (23) à proximité de la base rigide (1) et des moyens de fixation supérieurs (3s, 4s) prévus sur la face avant (23) à proximité de la face supérieure (20), et
- la structure de stockage (2) est déformable, de sorte que la face avant (23) peut venir au plus près de la poussette (P), à la fois au niveau de la base rigide (1) et au niveau de la face supérieure (20), en déformant la structure de stockage (2).

2. Chariot de courses (C) selon la revendication 1, dans lequel la structure de stockage (2) est réalisée en un matériau textile relativement rigide qui présente une tenue propre, sans besoin d'une armature de support.

3. Chariot de courses (C) selon la revendication 1 ou 2, dans lequel la structure de stockage (2) est pliable ou enroulable dans un état compact sur la base rigide (1).

4. Chariot de courses (C) selon la revendication 3, dans lequel les moyens de fixation (3i, 4i ; 3s, 4s) servent à maintenir la structure de stockage (2) dans son état compact.

5. Chariot de courses (C) selon l'une quelconque des revendications précédentes, dans lequel les faces latérales (22) sont raccordées aux faces avant (23) et arrière (24) au moyen de coutures surpiquées (2p), avantageusement à ganse passepoil (2g).

6. Chariot de courses (C) selon l'une quelconque des revendications précédentes, dans lequel la structure de stockage (2) comprend de trous d'évent (25), avantageusement à proximité de la base rigide (1).

7. Chariot de courses (C) selon l'une quelconque des revendications précédentes, dans lequel les moyens de fixation (3i, 4i ; 3s, 4s) comprennent des passants (3i; 3s) et des sangles (4i ;4s) qui passent dans les passants (3i; 3s) et viennent en prise avec un élément de la poussette (P).

8. Chariot de courses (C) selon la revendication 7, dans lequel les moyens de fixation inférieurs (3i, 4i) et supérieurs (3s, 4s) comprennent chacun une paire de passants (3i; 3s), avantageusement double, cousus sur la face avant (23) et une paire de sangles (4i ;4s), avantageusement à Scratch.

9. Chariot de courses (C) selon l'une quelconque des revendications précédentes, dans lequel les faces latérales (22) sont pourvues de plaques rigides (221), avantageusement amovibles ou pliables.

10. Chariot de courses (C) selon la revendication 9, dans lequel les plaques rigides (221) présentent des coins arrondis (222) pour permettre la déformation de la structure de stockage (2).

11. Chariot de courses (C) selon l'une quelconque des revendications précédentes, dans lequel la structure de stockage (2) comprend une enveloppe externe (2e) et une doublure interne (2i), la base rigide (1) étant disposée entre l'enveloppe externe (2e) et la doublure interne (2i).

12. Chariot de courses (C) selon l'une quelconque des revendications précédentes, dans lequel la base rigide (1) et au moins une partie de la structure de stockage (2) présentent des propriétés isothermes.

13. Chariot de courses (C) selon l'une quelconque des revendications précédentes, dans lequel au moins une face parmi la face arrière (24) et les faces latérales (22) est transparente.

14. Chariot de courses (C) selon l'une quelconque des revendications précédentes, présentant des dimensions telles que l'utilisateur peut tenir des moyens de préhension (P4) de la poussette (P) avec le chariot de courses (C) fixé à la poussette (P).

15. Ensemble d'une poussette (P) et d'un chariot de courses (C) selon l'une quelconque des revendications précédentes, **caractérisé en ce que** le chariot de courses (C) est accroché de manière amovible à l'arrière de la poussette (P) par les moyens de fixation (3i, 4i ; 3s, 4s), en déformant si nécessaire la structure de stockage (2).
